# EUROPEAN PATENT SPECIFICATION

(11) **EP 2 541 097 B1**
(45) Date of publication and mention of the grant of the patent: **25.06.2014**
(21) Application number: 12150061.5
(22) Date of filing: 03.01.2012
(51) Int. Cl.: F16H 3/091, F16H 3/10, F16H 63/30

(54) **Variable speed transmission device for a gearbox**
Übertragungsvorrichtung mit verstellbarer Geschwindigkeit für ein Getriebe
Dispositif de transmission à vitesse variable pour boîte de vitesses

(30) Priority: 30.06.2011 TW 100212012
(43) Date of publication of application: 02.01.2013
(73) Proprietor: China Motor Corporation, Taipei (TW)
(72) Inventor: Chen, Ching-Ya, Yangmei City (TW); Chuang, Keng-Tso, Yangmei City (TW); Liu, Han-Hsueh, Yangmei City (TW); Lee, Hung-Chi, Yangmei City (TW)
(74) Representative: Stöckeler, Ferdinand

(56) References cited:
- FR-A1- 2 946 293
- US-A1- 2007 272 511

## Description

This invention relates to a gearbox for a wheeled vehicle, more particularly to a variable speed transmission device for a gearbox.

Referring to Fig. 1, a conventional clutch transmission gearbox for a wheeled vehicle as disclosed in U.S. Patent No. 7,191,675 B2 is shown to include a gearshift lever 2, a gearshift hub shaft 3, a fork mounting shaft 4, a main shaft 5, a reversing shaft 6, a driven shaft 7, and an output shaft 8 mounted in a casing 1. Through operation of the gearshift lever 2, a gearshift hub 301 on the gearshift hub shaft 3 can be brought to drive an engaging fork 401 on the fork mounting shaft 4 so as to move a sliding block 501 on the main shaft 5 for performing variable speed transmission. However, with such an arrangement, the conventional transmission gearbox is bulky and cannot be easily assembled to a wheeled vehicle, such as an electric motorcycle.

It is desirable to improve the aforesaid clutch transmission gearbox to simplify the structure thereof so as to make it more compact.

An object of the present invention is to provide a variable speed transmission device for a gearbox which is compact and has a simple construction.

According to this invention, the variable speed transmission device includes a casing, an input shaft having a drive shaft segment which is rotatably mounted in the casing, first and second driving gears mounted to rotate with the drive shaft segment, an output shaft having a delivering segment which is rotatably mounted in the casing, a transmission shaft rotatably mounted in the casing between the input and output shafts, a first driven gear meshed with the first driving gear, and coaxially coupled with the delivering segment so as to be driven with a higher torque, and a second driven gear meshed with the second driving gear, and coaxially coupled with the delivering segment. The second driven gear has a pitch circle diameter larger than that of the second driving gear and smaller than that of the first driven gear such that the second driven gear is driven to rotate about the transmission axis with a lower torque.

The variable speed transmission device further includes a freewheel mechanism, a clutch collar, and a synchronizing unit. The freewheel mechanism is disposed to couple the first driven gear with the distal portion such that the higher torque is uni-directionally transmitted to the transmission shaft to rotate the transmission shaft only in a forward direction with a lower speed at a low gear position, thereby permitting the output shaft to deliver a drive which corresponds to the higher torque. The clutch collar is non-rotatably coupled with the transmission shaft, and is shiftable between a locking position, where the clutch collar is engaged with the second driven gear to transmit the lower torque to the transmission shaft so as to rotate the transmission shaft in the forward direction with a higher speed at a high gear position, which overruns the lower speed, thereby permitting the output shaft to deliver a drive which corresponds to the lower torque, and an unlocking position, where the clutch collar is disengaged from the second driven gear. The synchronizing unit is disposed to bring the clutch collar into synchronization with the second driven gear in rotation immediately before shifting of the clutch collar to the locking position.

Other features and advantages of the present invention will become apparent in the following detailed description of the preferred embodiment of the invention, with reference to the accompanying drawings, in which:

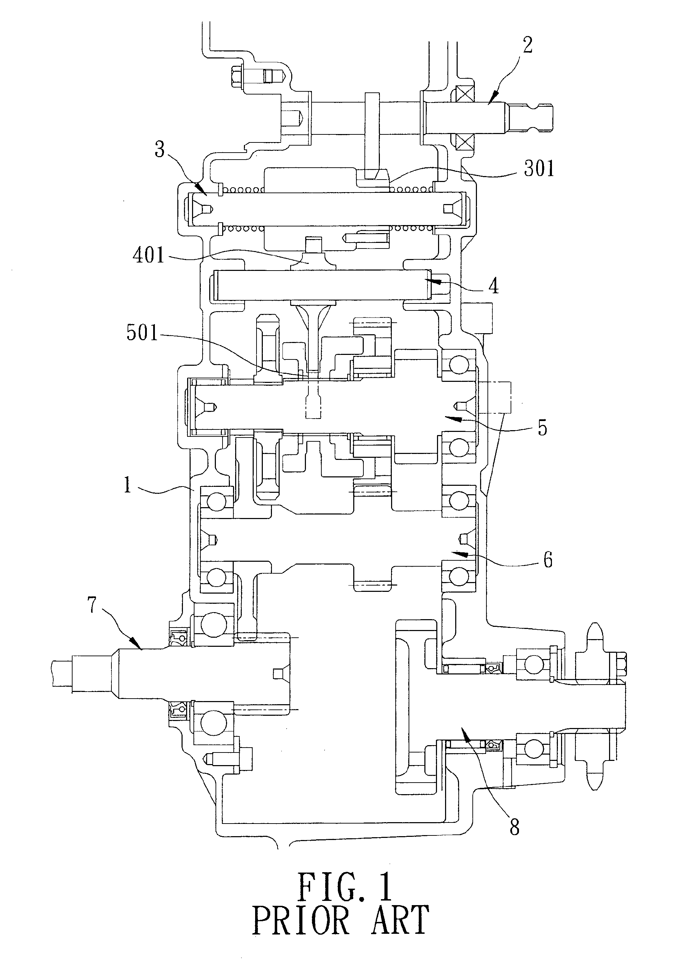

Fig. 1 is a schematic view of a conventional clutch transmission gearbox;
Fig. 2 is a sectional view of the embodiment of a variable speed transmission device for a gearbox according to this invention;
Fig. 3 is an enlarged sectional view of a portion of Fig. 2;
Fig. 4 is a sectional view showing the embodiment at a high gear position;
Fig. 5 is a schematic view of an operating unit of the embodiment;
Fig. 6 is a fragmentary side view of the operating unit; and
Fig. 7 is a view similar to Fig. 6, showing the operating unit at an operated position.

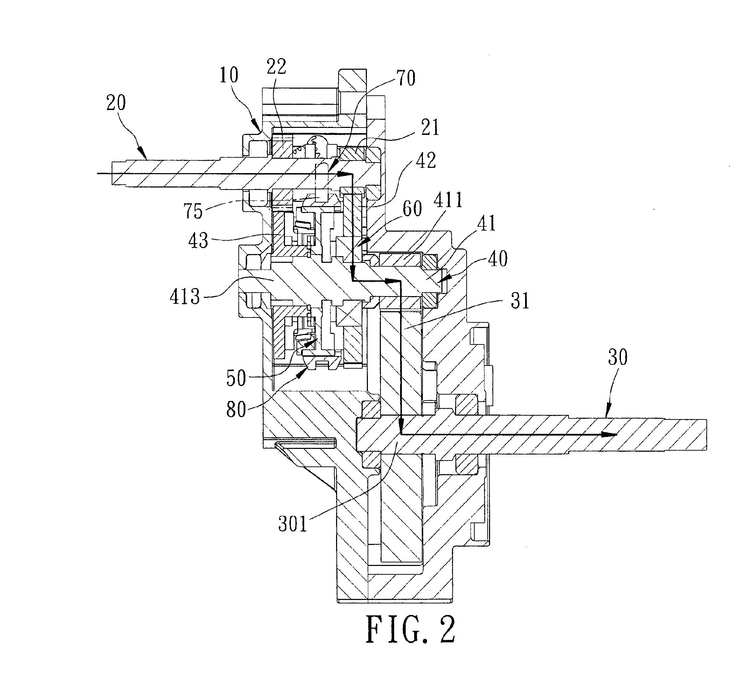

Referring to Figs. 2 to 4, the embodiment of a variable speed transmission device for a gearbox according to the present invention is shown to comprise a casing 10, an input shaft 20, an output shaft 30, a transmission unit 40, a freewheel mechanism 60, a clutch collar 80, and a synchronizing unit 50.

The input shaft 20 is disposed for receiving an input torque of an engine for a wheeled vehicle, and has a drive shaft segment 201 which is rotatably mounted in the casing 10, and which includes proximate and distal regions 202, 203 opposite to each other along an input axis. First and second driving gears 21, 22 are mounted respectively to rotate with the distal and proximate regions 203, 202 about the input axis. The second driving gear 22 has a pitch circle diameter larger than that of the first driving gear 21.

The output shaft 30 has a delivering segment 301 which is rotatably mounted in the casing 10 about an output axis that is parallel to the input axis. An output gear 31 is mounted to rotate with the delivering segment 301 about the output axis.

The transmission unit 40 includes a transmission shaft 41, a first driven gear 42 and a second driven gear 43. The transmission shaft 41 is rotatably mounted in the casing 10 about a transmission axis that is parallel to the input axis, and is interposed between the drive shaft segment 201 and the delivering segment 301, and has a transmission gear 411 which is mounted to rotate therewith and which is meshed with the output gear 31. The transmission shaft 41 has proximate and distal portions 413, 414 opposite to each other along the transmission axis, and a spline toothed portion 412 interposed between the proximate and distal portions 413, 414. The first driven gear 42 is meshed with the first driving gear 21, and is coaxially coupled with the distal portion 414 so as to be driven about the transmission axis with a higher torque (described in more detail hereinafter) . The second driven gear 43 is meshed with the second driving gear 22, and is coaxially coupled with the proximate portion 413. The second driven gear 43 has a pitch circle diameter larger than that of the second driving gear 22, and smaller than that of the first driven gear 42. Hence, the gear ratio of the first driven gear 42 to the first driving gear 21 is larger than that of the second driven gear 43 to the second driving gear 22. With such an arrangement in gear ratio, the second driven gear 43 is driven to rotate about the transmission axis with a lower torque.

In this embodiment, the freewheel mechanism 60 is in the form of a uni-directional bearing which is interposed between the first driven gear 42 and the distal portion 414 such that the higher torque is uni-directionally transmitted to the distal portion 414 to rotate the transmission shaft 41 only in a forward direction with a lower speed at a low gear position, thereby permitting the output shaft 30 to deliver a drive which corresponds to the higher torque.

The synchronizing unit 50 includes a driving disc 51 which has a grooved portion 511 to be splined with the spline toothed portion 412 of the transmission shaft 41. The clutch collar 80 is splined with the driving disc 51 by virtue of splines 81, 512 to permit axial displacement along the transmitting axis. The synchronizing unit 50 further includes an inner synchronizing ring 52 movably mounted on the driving disc 51 to be frictionally engageable with the second driven gear 43, and an outer synchronizing ring 53 which is non-rotatably attached to the driving disc 51 and in conical-surface frictional engagement with the inner synchronizing ring 53.

The operating unit 70 includes an engaging fork 75 which is connected to an annular groove 82 in the clutch collar 80 to actuate the clutch collar 80 to displace along the transmitting axis.

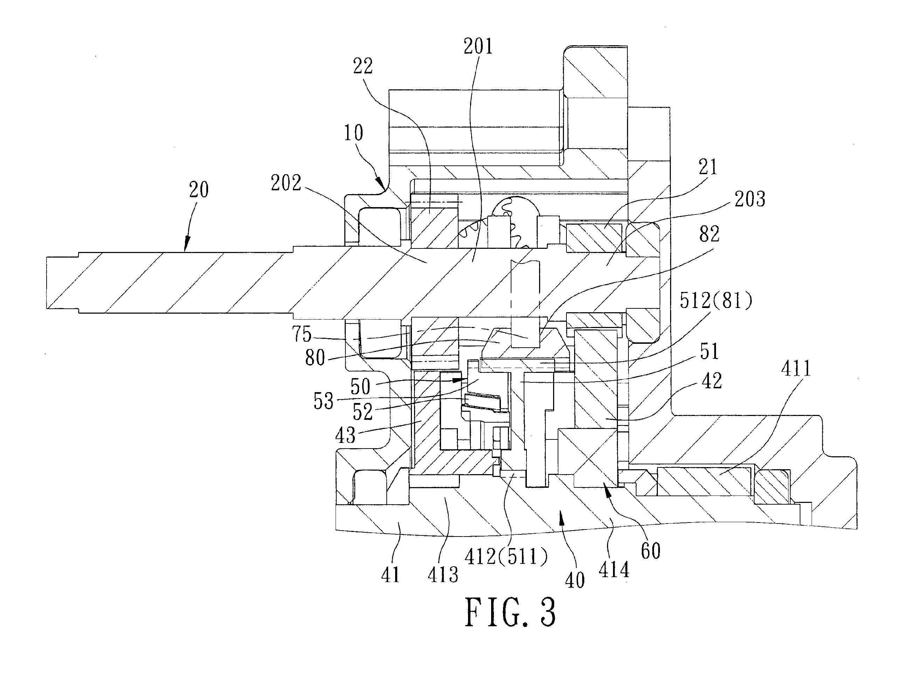

Figs. 2 and 3 illustrate the clutch collar 80 in an unlocking position (i.e., at the low gear position) to be disengaged from the second driven gear 43. At this stage, the input torque from the input shaft 20 is transmitted through the first driving and driven gears 21, 42 to rotate the transmission shaft 41 by means of the uni-directional bearing 60, thereby delivering the higher torque with the lower speed to the output shaft 30, as indicated by arrows in Fig. 2. Meanwhile, the second driven gear 43, which is disengaged from the synchronizing unit 50, and idles around the transmitting axis.

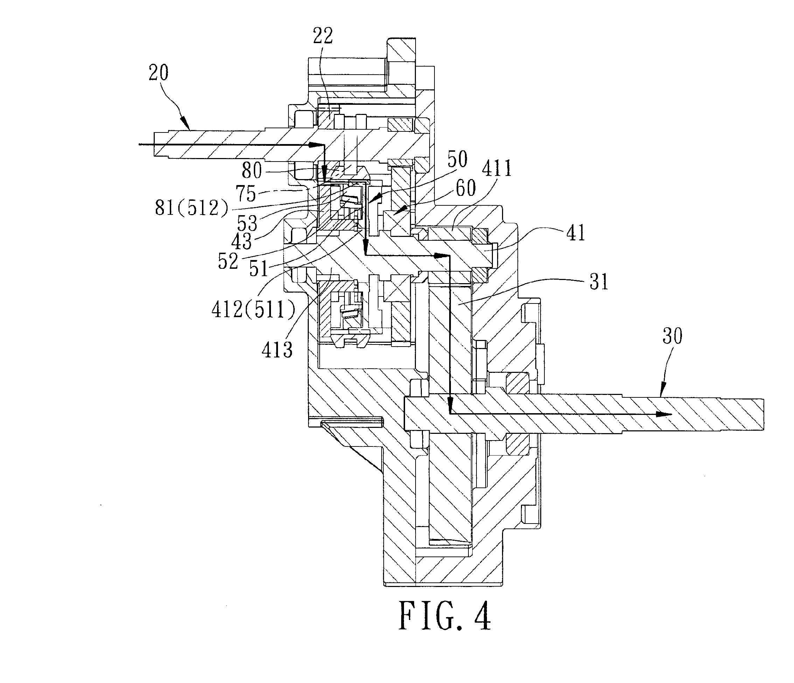

As shown in Fig. 4, when the engaging fork 75 is actuated to shift the clutch collar 80 to a locking position (i.e., at a high gear position), the clutch collar 80 is engaged with the second driven gear 43 to transmit the lower torque to the proximate portion 413 so as to rotate the transmission shaft 41 in the forward direction with a higher speed, which overruns the lower speed, thereby permitting the output shaft 30 to deliver a drive which corresponds to the lower torque. Note that, immediately before shifting of the clutch collar 80 to the locking position, the synchronizing unit 50 can bring the clutch collar 80 into synchronization with the second driven gear 43 in rotation in a known manner.

As illustrated, by means of difference of the gear ratio of the first and second driving gears 21, 22 to the first and second driven gears 42, 43, the clutch collar 80 is shifted between the locking and unlocking positions to deliver lower and higher torques to the output shaft 30. Additionally, the first and second driving gears 21, 22 are constantly mounted to rotate with the input shaft 20, and by virtue of the uni-directional bearing 60 and the synchronizing unit 50, the first and second driven gears 42, 43 are coaxially coupled with the transmission shaft 41 so as to render the gearbox compact.

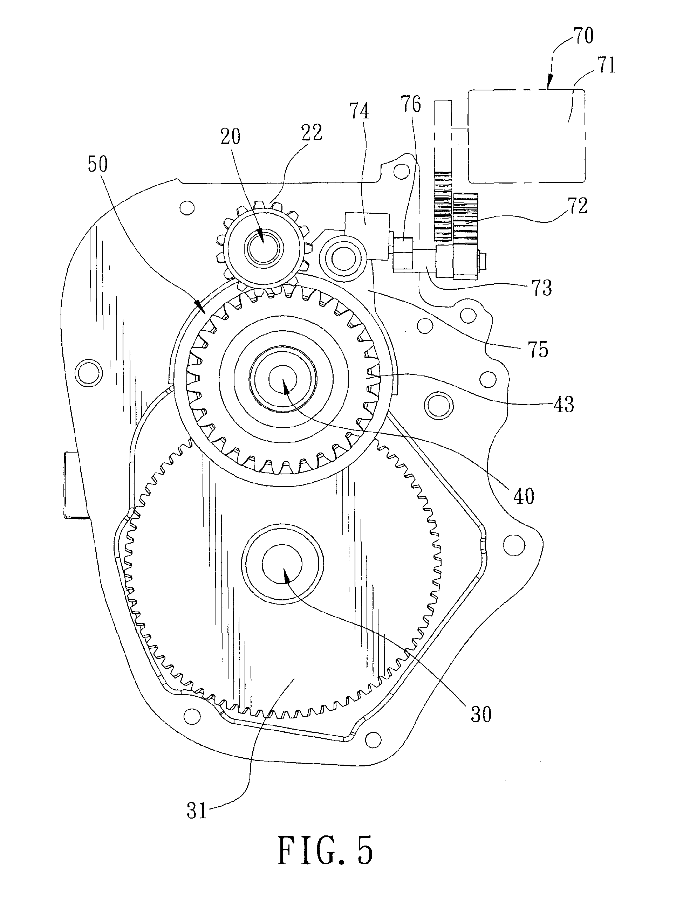

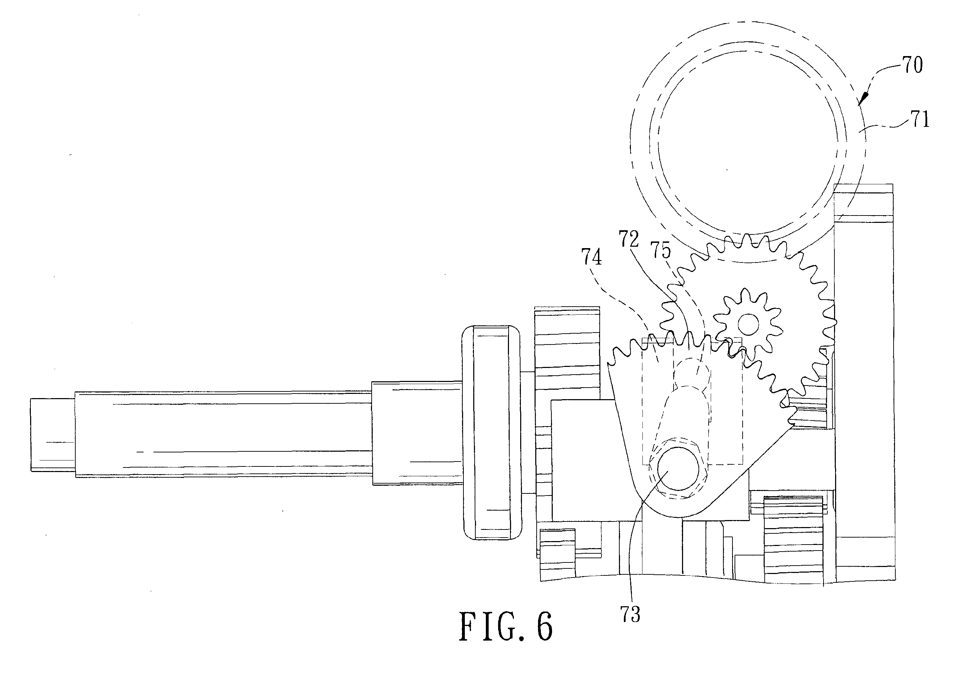

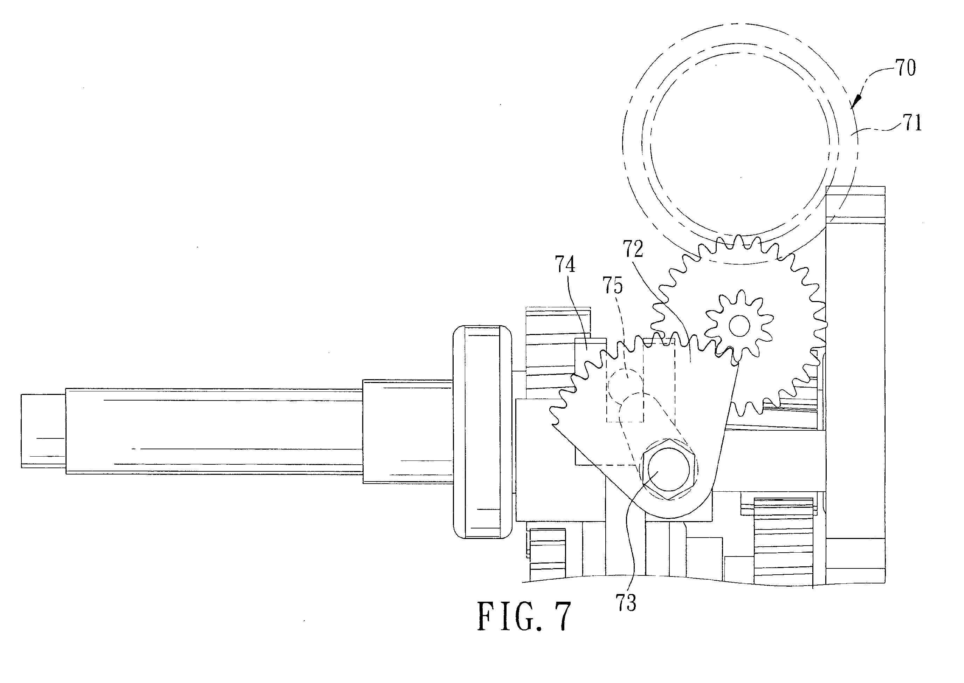

Further, referring to Figs. 5 to 7, the operating unit 70 may include a servo motor 71, a gear train which has an output gear 72 and a rotary shaft 73, a push block 74, and a cam member 76. The output gear 72 is in the form of a sector gear 72 which is driven by the servo motor 71 to be angularly positionable about a driving axis that is oriented in a direction transverse to the transmitting axis. The rotary shaft 73 is connected to rotate with the sector gear 72 about the driving axis. The push block 74 is connected to the rotary shaft 73 by means of the cam member 76 so as to translate the angular displacement of the sector gear 72 into an axial displacement of the push block 74. With such a gear transmission, the engaging fork 75 is actuated to displace along the transmission axis.

## Claims

1. A variable speed transmission device comprising:
a casing (10);
an input shaft (20) for receiving an input torque, said input shaft (20) having a drive shaft segment (201) which is rotatably mounted in said casing (10), and which includes proximate and distal regions (202, 203) opposite to each other along an input axis;
a first driving gear (21) mounted to rotate with said distal region (203) about the input axis;
a second driving gear (22) which is mounted to rotate with said proximate region (202), and which has a pitch circle diameter larger than that of said first driving gear (21);
an output shaft (30) having a delivering segment (301) which is rotatably mounted in said casing (10) about an output axis that is parallel to the input axis;
a transmission shaft (41) which is rotatably mounted in said casing (10) about a transmission axis that is parallel to the input axis, and which is interposed between said drive shaft segment (201) and said delivering segment (301), said transmission shaft (41) having proximate and distal portions (413, 414) opposite to each other along the transmission axis;
a first driven gear (42) which is meshed with said first driving gear (21), and which is coaxially coupled with said distal portion (414) so as to be driven about the transmission axis with a higher torque; and
a second driven gear (43) which is meshed with said second driving gear (22), and which is coaxially coupled with said proximate portion (413), said second driven gear (43) having a pitch circle diameter larger than that of said second driving gear (22) and smaller than that of said first driven gear (42) such that said second driven gear (43) is driven to rotate about the transmission axis with a lower torque, **characterized in that** said variable speed transmission device further comprises:
a freewheel mechanism (60) disposed to couple said first driven gear (42) with said distal portion (414) such that the higher torque is uni-directionally transmitted to said distal portion (414) to rotate said transmission shaft (41) only in a forward direction with a lower speed at a low gear position, thereby permitting said output shaft (30) to deliver a drive which corresponds to the higher torque;
a clutch collar (80) non-rotatably coupled with said transmission shaft (41) and shiftable between a locking position, where said clutch collar (80) is engaged with said second driven gear (43) to transmit the lower torque to said proximate portion (413) so as to rotate said transmission shaft (41) in the forward direction with a higher speed at a high gear position, which overruns the lower speed, thereby permitting said output shaft (30) to deliver a drive which corresponds to the lower torque, and an unlocking position, where said clutch collar (80) is disengaged from said second driven gear (43); and
a synchronizing unit (50) disposed to bring said clutch collar (80) into synchronization with said second drivengear (43) in rotation immediately before shifting of said clutch collar (80) to the locking position.

2. The variable speed transmission device as claimed in Claim 1, **characterized in that** said synchronizing unit (50) includes a driving disc (51) which is non-rotatably mounted on said transmission shaft (41) and which is splined with said clutch collar (80) to permit displacement of said clutch collar (80), an inner synchronizing ring (52) which is movably mounted on said driving disc (51) to be frictionally engageable with said second driven gear (43), and an outer synchronizing ring (53) which is non-rotatably attached to said driving disc (51) and which is in conical-surface frictional engagement with said inner synchronizing ring (53).

3. The variable speed transmission device as claimed in Claim 2, **characterized in that** said freewheel mechanism (60) is in form of a uni-directional bearing (60) interposed between said first driven gear (42) and said distal portion (414).

4. The variable speed transmission device as claimed in Claim 2, further **characterized by** an operating unit (70) including an engaging fork (75) which is configured to actuate said clutch collar (80) to shift along the transmitting axis.

5. The variable speed transmission device as claimed in Claim 3, **characterized in that** said operating unit (70) further includes a servo motor (71) and a gear train which has an output gear (72) angularly positionable about a driving axis that is oriented in a direction transverse to the transmitting axis, and which is couple with said engaging fork (75) so as to shift said clutch collar (80) from the unlocking position to the locking position when said output gear (72) is angularly displaced about the driving axis.

6. The variable speed transmission device as claimed in Claim 4, **characterized in that** said operating unit (70) further includes a cam member (76) which is disposed to translate the angular displacement of said output gear (72) into the axial displacement of said engaging fork (75).

## Patentansprüche

1. Eine Übertragungseinrichtung mit variabler Geschwindigkeit, die folgende Merkmale aufweist:
ein Gehäuse (10);
eine Eingangswelle (20) zum Aufnehmen eines Eingangsdrehmoments, wobei die Eingangswelle (20) ein Antriebswellensegment (201) aufweist, das drehbar in dem Gehäuse (10) befestigt ist, und das nahe und distale Regionen (202, 203) umfasst, die einander entlang einer Eingangsachse gegenüberliegen;
ein erstes Antriebsrad (21), das befestigt ist, um sich mit der distalen Region (203) um die Eingangsachse zu drehen;
ein zweites Antriebsrad (22), das befestigt ist, um sich mit der nahen Region (202) zu drehen, und das einen Teilkreisdurchmesser aufweist, der größer ist als derjenige des ersten Antriebsrads (21);
eine Ausgangswelle (30) mit einem Liefersegment (301), das in dem Gehäuse (10) um eine Ausgangsachse drehbar befestigt ist, die parallel zu der Eingangsachse ist;
eine Übertragungswelle (41), die in dem Gehäuse (10) um eine Übertragungsachse drehbar befestigt ist, die parallel zu der Eingangsachse ist, und die zwischen dem Antriebswellensegment (201) und dem Liefersegment (301) angeordnet ist, wobei die Übertragungswelle (41) nahe und distale Abschnitte (413, 414) aufweist, die einander entlang der Übertragungsachse gegenüber liegen;
ein erstes getriebenes Rad (42), das mit dem ersten Antriebsrad (21) ineinandergreift, und das mit dem distalen Abschnitt (414) koaxial gekoppelt ist, um mit einem höheren Drehmoment um die Übertragungsachse angetrieben zu werden; und
ein zweites getriebenes Rad (43), das mit dem zweiten Antriebsrad (22) ineinandergreift, und das mit dem nahen Abschnitt (413) koaxial gekoppelt ist, wobei das zweite getriebene Rad (43) einen Teilkreisdurchmesser aufweist, der größer ist als derjenige des zweiten Antriebsrads (22) und kleiner als derjenige des ersten getriebenen Rads (42), so dass das zweite getriebene Rad (43) angetrieben wird, um sich mit einem niedrigeren Drehmoment um die Übertragungsachse zu drehen, **dadurch gekennzeichnet, dass** die Übertragungseinrichtung mit variabler Geschwindigkeit ferner folgende Merkmale aufweist:
einen Freilaufmechanismus (60), der angeordnet ist, um das erste getriebene Rad (42) mit dem distalen Abschnitt (414) zu koppeln, so dass das höhere Drehmoment unidirektional zu dem distalen Abschnitt (414) übertragen wird, um die Übertragungswelle (41) nur in einer Vorwärtsrichtung zu drehen mit einer niedrigeren Geschwindigkeit bei einer niedrigen Getriebeposition, wodurch es der Ausgangswelle (30) ermöglicht wird, einen Antrieb zu liefern, der dem höheren Drehmoment entspricht;
eine Kupplungsmuffe (80), die nicht drehbar mit der Übertragungswelle (41) gekoppelt ist und verschiebbar ist zwischen einer Verriegelungsposition, wo die Kupplungsmuffe (80) in Eingriff ist mit dem zweiten getriebenen Rad (43), um das niedrigere Drehmoment zu dem nahen Abschnitt (413) zu übertragen, um die Übertragungswelle (41) in der Vorwärtsrichtung mit einer höheren Geschwindigkeit bei einer höheren Getriebeposition zu drehen, die die niedrigere Geschwindigkeit überschreitet, wodurch es der Ausgangswelle (30) ermöglicht wird, einen Antrieb zu liefern, der dem niedrigeren Drehmoment entspricht, und einer Entriegelungsposition, wo die Kupplungsmuffe (80) außer Eingriff ist mit dem zweiten getriebenen Rad (43); und
eine Synchronisierungseinheit (50), die angeordnet ist, um die Kupplungsmuffe (80) in Synchronisation mit dem zweiten getriebenen Rad (43) zu bringen, in der Drehung unmittelbar bevor die Kupplungsmuffe (80) zu der Verriegelungsposition verschoben wird.

2. Die Übertragungseinrichtung mit variabler Geschwindigkeit gemäß Anspruch 1, **dadurch gekennzeichnet, dass** die Synchronisierungseinheit (50) eine Antriebsscheibe (51) umfasst, die nicht drehbar an der Übertragungswelle (41) befestigt ist und die mit der Kupplungsmuffe (80) verkeilt ist, um eine Verschiebung der Kupplungsmuffe (80) zu ermöglichen, einen inneren Synchronisierungsring (42), der bewegbar an der Antriebsscheibe (51) befestigt ist, um reibschlüssig zu sein mit dem zweiten getriebenen Rad (43), und einen äußeren Synchronisierungsring (53), der nicht drehbar an der Antriebsscheibe (51) angebracht ist und der in einem Kegelflächenreibschluss mit dem inneren Synchronisierungsring (53) ist.

3. Die Übertragungseinrichtung mit variabler Geschwindigkeit gemäß Anspruch 2, **dadurch gekennzeichnet, dass** der Freilaufmechanismus (60) in der Form eines unidirektionalen Lagers befestigt ist, das zwischen dem ersten angetriebenen Rad (42) und dem distalen Abschnitt (414) angeordnet ist.

4. Die Übertragungseinrichtung mit variabler Geschwindigkeit gemäß Anspruch 2, ferner **gekennzeichnet durch** eine Betriebseinheit (70), die eine Eingriffnahmegabel (75) umfasst, die konfiguriert ist, um die Kupplungsmuffe (80) zu betätigen, damit sich dieselbe entlang der Übertragungsachse verschiebt.

5. Die Übertragungseinrichtung mit variabler Geschwindigkeit gemäß Anspruch 3, **dadurch gekennzeichnet, dass** die Betriebseinheit (70) ferner einen Servomotor (71) und einen Getriebezug umfasst, der ein Abtriebsrad (72) aufweist, das winkelmäßig positionierbar ist um eine Antriebsachse, die in einer Richtung transversal zu der Übertragungsachse ausgerichtet ist; und die mit der Eingriffnahmegabel (75) gekoppelt ist, um die Kupplungsmuffe (80) von der Entriegelungsposition zu der Verriegelungsposition zu verschieben, wenn das Abtriebsrad (72) winkelmäßig um die Antriebsachse verschoben ist.

6. Die Übertragungseinrichtung mit variabler Geschwindigkeit gemäß Anspruch 4, **dadurch gekennzeichnet, dass** die Betriebseinheit (70) ferner ein Nockenbauglied (76) umfasst, das angeordnet ist, um die Winkelverschiebung des Abtriebsrads (72) in die axiale Verschiebung der Eingriffnahmegabel (75) zu übertragen.

## Revendications

1. Dispositif de transmission à vitesse variable, comprenant:
un boîtier (10);
un arbre d'entrée (20) destiné à recevoir un couple d'entrée, ledit arbre d'entrée (20) présentant un segment d'arbre d'entraînement (201) qui est monté de manière rotative dans ledit boîtier (10), et qui comporte des régions proximale et distale (202, 203) opposées l'une à l'autre le long d'un axe d'entrée;
un premier engrenage d'entraînement (21) monté de manière à tourner avec ladite région distale (203) autour de l'axe d'entrée;
un deuxième engrenage d'entraînement (22) qui est monté de manière à tourner avec ladite région proximale (202), et qui présente un diamètre de cercle primitif plus grand que celui dudit premier engrenage d'entraînement (21);
un arbre de sortie (30) présentant un segment de délivrance (301) qui est monté de manière rotative dans ledit boîtier (10) autour d'un axe de sortie qui est parallèle à l'axe d'entrée;
un arbre de transmission (41) qui est monté de manière rotative dans ledit boîtier (10) autour d'un axe de transmission qui est parallèle à l'axe d'entrée, et qui est interposé entre ledit segment d'arbre d'entraînement (201) et ledit segment de délivrance (301), ledit arbre de transmission (41) présentant des parties proximale et distale (413, 414) opposées l'une à l'autre le long l'axe de transmission;
un premier engrenage mené (42) qui est en prise avec ledit premier engrenage d'entraînement (21), et qui est couplé de manière coaxiale à ladite partie distale (414) de manière à être entraîné autour de l'axe de transmission avec un couple supérieur; et
un deuxième engrenage entraîné (43) qui est en prise avec ledit deuxième engrenage d'entraînement (22), et qui est couplé de manière coaxiale à ladite partie proximale (413), ledit deuxième engrenage mené (43) présentant un diamètre de cercle primitif plus grand que celui dudit deuxième engrenage d'entraînement (22) et plus petit que celui dudit premier engrenage mené (42) de sorte que ledit deuxième engrenage mené (43) soit entraîné de manière à tourner autour de l'axe de transmission avec un couple inférieur,
**caractérisé par le fait que** ledit dispositif de transmission à vitesse variable comprend par ailleurs:
un mécanisme de roue libre (60) disposé de manière à coupler ledit premier engrenage mené (42) avec ladite partie distale (414) de sorte que le couple supérieur soit transmis de manière unidirectionnelle à ladite partie distale (414), pour faire tourner ledit arbre de transmission (41) uniquement en direction avant à une vitesse inférieure en une position de basse vitesse, permettant ainsi que ledit arbre de sortie (30) fournisse un entraînement qui correspond au couple élevé;
un collier d'embrayage (80) couplé de manière non rotative audit arbre de transmission (41) et déplaçable entre une position de verrouillage, dans laquelle ledit collier d'embrayage (80) est en prise avec ledit deuxième engrenage mené (43), pour transmettre le couple inférieur à ladite partie proximale (413), de manière à faire tourner ledit arbre de transmission (41) en direction avant à une vitesse supérieure en une position de grande vitesse, qui excède la vitesse plus faible, permettant ainsi que ledit arbre de sortie (30) fournisse un entraînement qui correspond au couple inférieur, et une position de déverrouillage, dans laquelle ledit collier d'embrayage (80) est dégagé dudit deuxième engrenage mené (43); et
une unité de synchronisation (50) disposée de manière à amener ledit collier d'embrayage (80) en synchronisation avec ledit deuxième engrenage mené (43) en rotation immédiatement avant le déplacement dudit collier d'embrayage (80) vers la position de verrouillage.

2. Dispositif de transmission à vitesse variable selon la revendication 1, **caractérisé par le fait que** ladite unité de synchronisation (50) comporte un disque d'entraînement (51) qui est monté de manière non rotative sur ledit arbre de transmission (41) et qui s'emboîte sur ledit collier d'embrayage (80), pour permettre le déplacement dudit collier d'embrayage (80), une bague de synchronisation intérieure (52) qui est monté de manière mobile sur ledit disque (51), de manière à pouvoir venir en prise par friction avec ledit deuxième engrenage mené (43), et une bague de synchronisation extérieure (53) qui est fixée de manière non rotative audit disque d'entraînement (51) et qui est en prise par friction selon une surface conique avec ladite bague de synchronisation intérieure (53).

3. Dispositif de transmission à vitesse variable selon la revendication 2, **caractérisé par le fait que** ledit mécanisme de roue libre (60) se présente sous forme d'un palier unidirectionnel (60) interposé entre ledit premier engrenage mené (42) et ladite partie distale (414).

4. Dispositif de transmission à vitesse variable selon la revendication 2, **caractérisé par** ailleurs par une unité d'actionnement (70) comportant une fourche de mise en prise (75) qui est configurée de manière à actionner ledit collier d'embrayage (80) pour se déplacer le long de l'axe de transmission.

5. Dispositif de transmission à vitesse variable selon la revendication 3, **caractérisé par le fait que** ladite unité d'actionnement (70) comporte par ailleurs un servomoteur (71) et un train d'engrenages qui présente un engrenage de sortie (72) pouvant être positionné angulairement autour d'un axe d'entraînement qui est orienté dans une direction transversale à l'axe de transmission; et qui est couplé à ladite fourche de venue en prise (75) de manière à déplacer ledit collier d'embrayage (80) de la position de déverrouillage à la position de verrouillage lorsque ledit engrenage de sortie (72) est déplacé angulairement autour de l'axe d'entraînement.

6. Dispositif de transmission à vitesse variable selon la revendication 4, **caractérisé par le fait que** ladite unité d'actionnement (70) comporte par ailleurs un élément de came (76) qui est disposé de manière à transformer le déplacement angulaire dudit engrenage de sortie (72) en déplacement axial de ladite fourche de venue en prise (75).
